(19) Europäisches Patentamt
European Patent Office
Office européen des brevets

(11) EP 1 298 178 B1

## (12) EUROPEAN PATENT SPECIFICATION

(45) Date of publication and mention
of the grant of the patent:
**18.07.2007 Bulletin 2007/29**

(51) Int Cl.:
*C09K 3/10* *(2006.01)*    *C08L 27/18* *(2006.01)*
*C08K 7/06* *(2006.01)*    *F16J 15/16* *(2006.01)*
*C08K 3/04* *(2006.01)*

(21) Application number: **01930242.1**

(22) Date of filing: **22.05.2001**

(86) International application number:
**PCT/JP2001/004261**

(87) International publication number:
**WO 2001/090274 (29.11.2001 Gazette 2001/48)**

(54) **SEAL RING**

DICHTUNGSRING

BAGUE D'ETANCHEITE

(84) Designated Contracting States:
**DE FR GB IT NL**

(30) Priority: **25.05.2000 JP 2000154783**
**03.07.2000 JP 2000201306**
**25.01.2001 JP 2001017372**

(43) Date of publication of application:
**02.04.2003 Bulletin 2003/14**

(73) Proprietor: **DAIKIN INDUSTRIES, LTD.**
**Osaka-shi, Osaka 530-8323 (JP)**

(72) Inventors:
• **YANAGIGUCHI, Tomihiko**
**Settsu-shi,**
**Osaka 566-8585 (JP)**

• **SUKEGAWA, Masamichi**
**Settsu-shi,**
**Osaka 566-8585 (JP)**
• **ASANO, Michio**
**Settsu-shi,**
**Osaka 566-8585 (JP)**

(74) Representative: **HOFFMANN EITLE**
**Patent- und Rechtsanwälte**
**Arabellastrasse 4**
**81925 München (DE)**

(56) References cited:
**EP-A- 0 583 481      EP-A- 1 225 377**
**EP-A- 1 273 614      JP-A- 5 239 440**
**JP-A- 51 065 149     JP-A- 58 109 549**
**JP-A- 2000 009 228**

**Description**

TECHNICAL FIELD

The present invention relates to a seal ring, particularly a seal ring which has stable friction torque from the beginning over a long period of time. The seal ring of the present invention can be suitably used particularly as a seal ring for a valve device of a power steering of standard-sized or large-sized vehicles. In addition, since the seal ring has abrasion resistance and stable friction against the opposite material from the beginning over a long period of time, the seal ring of the present invention can be suitably used as a seal ring for automatic transmission or shock absorber.

BACKGROUND ART

Polytetrafluoroethylene (PTFE) powder (granular resin powder) has excellent properties such as non-tackiness, sliding property and heat resistance, but also has a defect that the strength of molded articles prepared therefrom is insufficient. In order to overcome the disadvantage, it has been actively attempted to incorporate an organic filler such as polyimide resin powder or an inorganic filler such as carbon fiber, bronze powder or graphite powder, and those fillers are variously combined to prepare different PTFE compositions depending on the purpose of use.

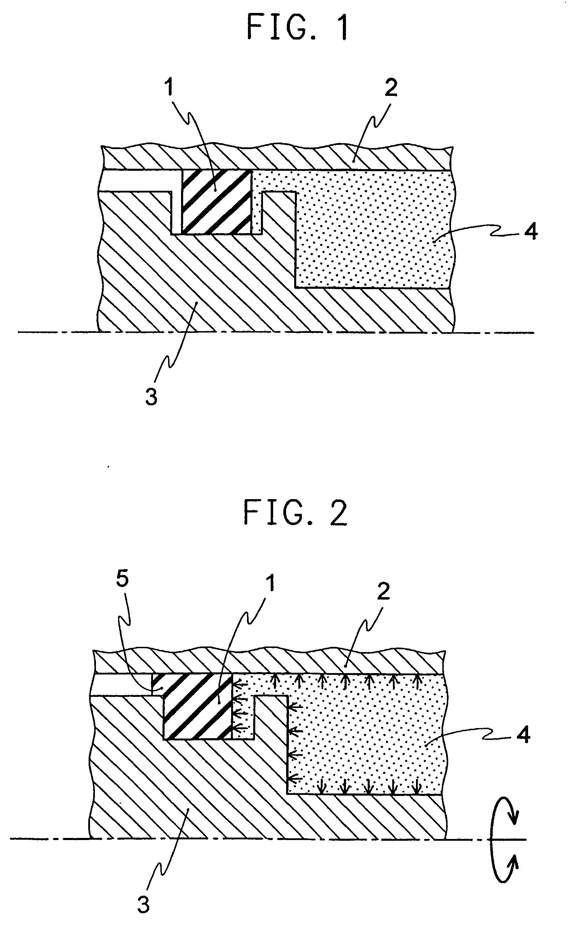

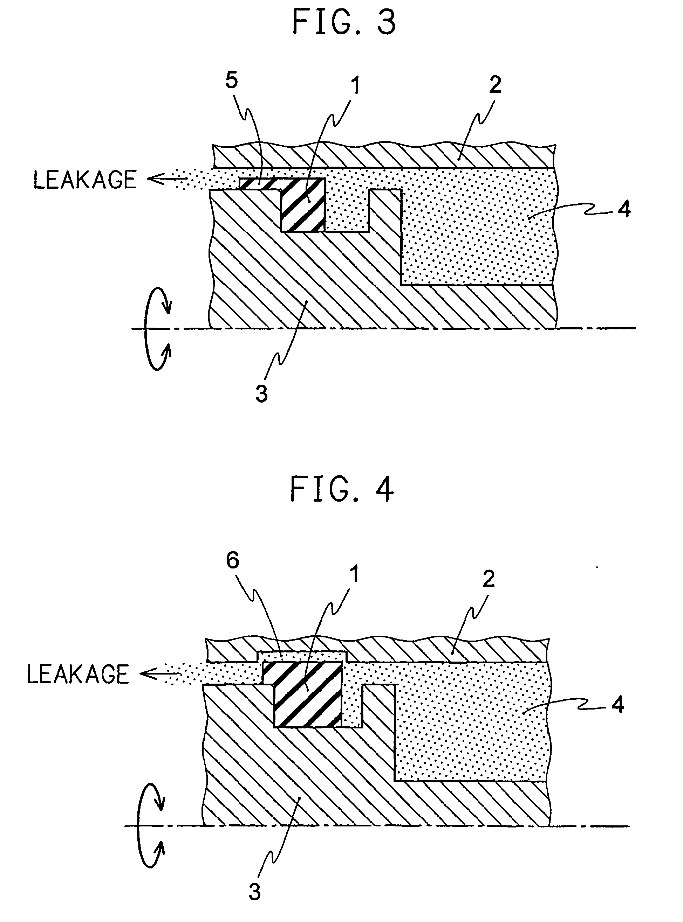

Meanwhile, seal rings are used, for example, in such an occasion as shown in the diagrammatic cross-sectional view of Fig. 1. That is, the seal ring 1, a ring-like member which is put between the two members (housing 2 and seal ring set body 3) undergoing relative motion at a rotating portion or a sliding portion, is used to seal oil 4. In Fig. 1, the seal ring 1 is wound over the seal ring set body 3 and forms a sliding surface to the housing 2. During the use, the seal ring set body 3 rotates on the housing 2, and a relatively high pressure is applied to the seal ring from oil 4. Furthermore, when normal and reverse rotations are repeated, friction torque remarkably fluctuates during the use, and the end face of the seal ring 1 is chipped when used long, creating extruded portion 5 (Fig. 3). Further, when the housing 2 is made of soft metal such as aluminum, the housing 2 is likely to be worn out and scraped portion 6 is created (Fig. 4). Eventually, leaking of oil 4 is caused in some case.

The above defect of seal rings is a serious problem to be solved, particularly when the seal ring is used for devices like a power steering of automobiles where driving feel and safety are required.

Furthermore, even if the oil pressure from oil 4 is relatively low and the sealing set body 3 rotates on the housing 2 at a high speed, the housing 2 is likely to be worn out when used long to generate scraped portion 6, causing leaking of oil 4 as well, when the housing 2 is made of soft metal such as aluminum.

The above defect of seal rings is a serious problem to be solved, particularly when the seal ring is used for devices like an automatic transmission of automobiles where safety is required.

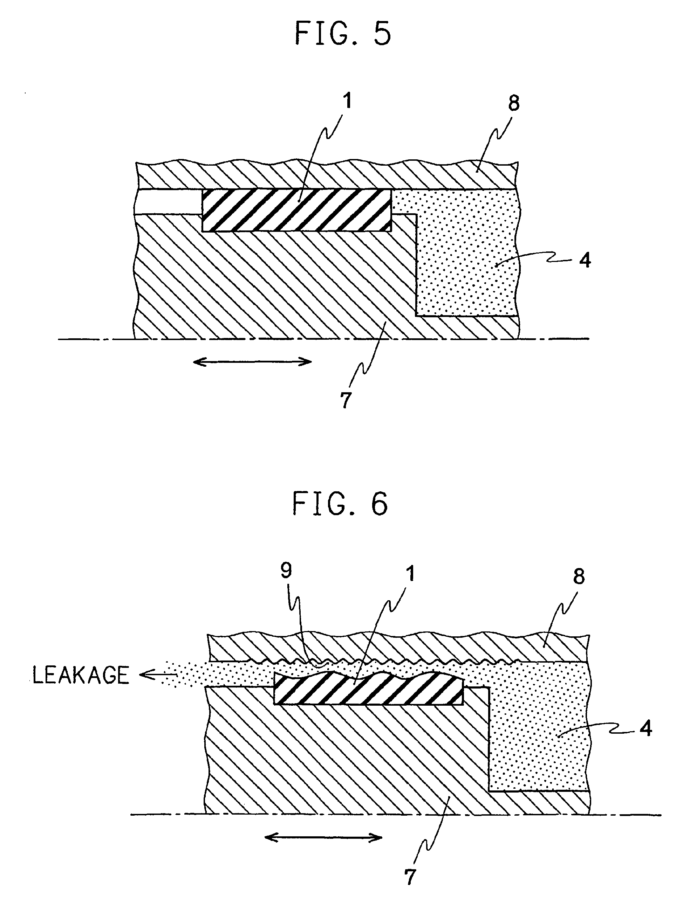

In addition, when the two members undergoing relative motion are a piston 7 and a cylinder 8, and the seal ring 1 is put between the two members to seal oil 4 with the piston 7 reciprocating along the cylinder 8, the friction (sliding resistance) on the sliding face between the seal ring 1 and the cylinder 8 remarkably fluctuates during the use, and the outer face of the seal ring 1 is chipped as shown in Fig. 6 when used long. Further, even if the cylinder 8 is made of relatively hard metal such as carbon steel, the cylinder 8 is likely to be worn out and scraped portion 9 can be made. Eventually, leaking of oil 4 is caused in some case.

The above defect of seal rings is a serious problem to be solved, particularly when the seal ring is used for devices like a shock absorber of automobiles where safety is required.

Conventional PTFE composition for such seal rings which need to have the above properties are:

(1) PTFE powder/polyimide (PI) powder/carbon fiber (JP-A-9-208929 and others);
(2) PTFE powder/aromatic polyoxybenzoylester heat resistant resin powder/carbon fiber (JP-B-1-13494, JP-A-11-21408);
(3) PTFE powder/graphite powder/carbon fiber (JP-A-239440); and
(4) PTFE powder/polyimide powder/carbon fiber (JP-A-9-208929).

However, under a high oil pressure of at least 8 MPa, breakage of seal ring and abrasion of opposite material (housing) occur relatively earlier. Therefore, it has been considered that such known PTFE compositions have a certain limit in durability.

Moreover, under a fast sliding condition of a rotation speed of at least 7,000 rpm, the opposite material wears off relatively earlier, also indicating the limited durability of such known PTFE compositions.

In addition, when reciprocative sliding movement is repeated under a high oil pressure of at least 8 MPa, breakage of seal ring and abrasion of opposite material occurs relatively earlier. Therefore, it has been also considered that such known PTFE compositions have a certain limit in durability.

An object of the present invention is to provide a seal ring which has small fluctuation of friction torque and does not break even in case of a long time use under high oil pressure, at high rotation speed or fast reciprocative sliding, while abrasion degree of the opposite material is kept small. The seal ring of the present invention has overcome the limited property of known compositions.

Another object of the present invention is to provide a seal ring which has excellent suitability for fitting while maintaining such durability.

DISCLOSURE OF INVENTION

That is, the present invention relates to a seal ring which contains a scaly graphite powder essentially alone as a filler, and consists essentially of 2 to 35 % by weight of the graphite powder and 65 to 98 % by weight of a polytetrafluoroethylene powder, wherein the graphite powder has an interplanar spacing of 0.335 to 0.340 nm, as measured by the powder X-ray diffraction method (formulated by Japan Society for the Promotion of Science, 117th Board, hereinafter referred to as "Gakushin method"; p 46 to 63, "Experiment Technology of Carbon (I)" edited by Carbon Society of Japan, Kagaku Gijutsu-Sha, June 1, 1978), and a size of a crystallite of (004) face of at least 70 nm.

As the scaly graphite powder, it is desirable to use a powder such that when "a" represents the mean value of the long diameter and the short diameter of a graphite powder particle and "c" represents a thickness of the graphite powder particle, a/c is at least 2.

As the scaly graphite powder, natural graphite is preferable.

In addition, as the PTFE powder, modified PTFE powder is preferable from the viewpoint of improving suitability for fitting.

The seal ring of the present invention is useful particularly for a valve device of a power steering of automobiles.

The present invention also relates to a seal ring such that when the seal ring is subjected to sliding under the following conditions (1), the seal ring does not break after 200,000 cycles and an abrasion depth of the opposite material is at most 10 μm after 200,000 cycles.

Condition (1)

Test equipment: Test equipment for evaluating durability of a seal ring having basically the same mechanism as a rack-and-pinion type power steering device
Oil pressure: 12 MPa
Oil temperature: 120°C
Kind of oil: Power steering fluid
Cycle: One cycle consisting of a normal rotation at 95 rpm for 2 seconds and a reverse rotation at 95 rpm for 2 seconds
Opposite material: Aluminum die cast (JIS H5302)
Seal ring-mounting member: Carbon steel (JIS G4051).

In the seal ring durability test of the present invention, a seal ring having a shape as mentioned above (outer diameter: 36.4 mm, width: 1.5 mm, height: 1.88 mm) is employed, which is now commonly used in Japan. In addition to this, a seal ring having an outer diameter of 36.2 mm, a width of 1.25 mm and a height of 1.83 mm and a seal ring having an outer diameter of 38.4 mm, a width of 1.45 mm and a height of 2.00 mm may also be used. Even if the latter seal rings are used, approximately the same test results can be obtained regardless of the shape.

As the test equipment for evaluating durability of a seal ring, one having basically the same mechanism as a valve device of a power steering of an actual automobile (actual device) is used. The "mechanism having basically the same mechanism as an actual device" refers to a mechanism which has the same mechanical structure as that of the actual device as long as the seal ring-mounting member and the sliding part are concerned (the same definition applies to test equipment described below). Every valve device of a power steering of an automobile has a common mechanism of seal ring-mounting member and sliding part regardless of type of automobiles as long as the power steering is a rack-and-pinion type. Therefore, by using such test equipment, it is possible to evaluate the properties as in the case where the seal ring is attached to an actual valve device. Example of an actual valve device is shown in a cross sectional view of, for example, Fig. 5 (a) on p 92, Engineering Journal No. 148, 1995, published by Koyo Seiko Co., Ltd.

In case of using a modified PTFE, in particular, a modified PTFE having a crystallinity of at least 20 %, a seal ring whose suitability for fitting is improved can be prepared. More specifically, the seal ring having a variation of outer diameter of at most 3.4 % as measured under the following conditions (2) can be obtained.

Condition (2)

Test method: enlarging an inner diameter of the seal ring to be tested by 10 % by setting the seal ring on a tapered jig of frustum form (inclination: 1/10), and then immediately measuring an outer diameter of the seal ring, wherein ((Outer diameter after test - Outer diameter before test) / Outer diameter before test) x 100 is assumed to be a variation of outer diameter

Tested seal ring: a ring whose cross-section is a rectangle of 1.5 mm by 1.88 mm, and whose inner diameter is 33.4 mm and an outer diameter is 36.4 mm.

Furthermore, the seal ring of the present invention is suitable for automatic transmission.

Herein, as shown in Fig. 1, the automatic transmission is a device comprising a housing 2, a seal ring set body 3 and a resin seal ring 1 which seals oil 4 filled between the housing 2 and the seal ring set body 3. The seal ring 1 comprises a scaly graphite powder essentially alone as a filler, and comprises a PTFE resin composition containing 65 to 98 % by weight of a PTFE powder and 2 to 35 % by weight of the graphite powder.

The seal ring for automatic transmission is one such that when the seal ring is subjected to rotational sliding under the following conditions (3), the seal ring does not break after 500 hours and an abrasion depth of the opposite material is at most 10 $\mu$m after 500 hours.

Condition (3)

Test equipment: Test equipment for evaluating durability of a seal ring having basically the same mechanism as a automatic transmission device
Oil pressure: 2 MPa
Oil temperature: 120°C
Kind of oil: Automatic transmission fluid
Rotation number: 8,000 rpm
Opposite material: Aluminum die cast (JIS H5302)
Seal ring-mounting member: Cast iron (JIS G5501)
Seal ring: outer diameter: 50 mm, width: 2 mm, height: 2 mm.

In addition, the seal ring of the present invention is suitable for shock absorber where reciprocating motion (strokes) repeatedly takes place.

Herein, as shown in Fig. 5, the shock absorber is a device comprising a cylinder 8, a piston 7 and a resin seal ring 1 which seals oil 4 filled between the cylinder 8 and the piston 7. The seal ring 1 comprises a scaly graphite powder essentially alone as a filler, and comprises a PTFE resin composition containing 65 to 98 % by weight of a PTFE powder and 2 to 35 % by weight of the graphite powder.

The seal ring for shock absorber is one such that when the seal ring is subjected to reciprocating sliding strokes under the following conditions (4), the seal ring does not break after 5,000,000 strokes; the maximum sliding resistance Fmax within the period of 5,000,000 strokes without the period of initial unstable sliding resistance is less than 1.5 times the minimum sliding resistance Fmin within the period; and oil leakage after 5,000,000 strokes is at most 15 ml.

Condition (4)

Test equipment: Test equipment for evaluating durability of a seal ring having basically the same mechanism as a shock absorber device
Oil pressure: 10 MPa
Oil temperature: 100°C
Kind of oil: Shock absorber oil
Stroke: 60 mm
Vibration frequency to be applied: 3 Hz
Opposite material: Carbon steel (JIS H4051)
Seal ring-mounting member: Cast iron (JIS G5501)

Seal ring: outer diameter: 28.5 mm, width: 7.4 mm, height: 0.8 mm (diameter of applied piston: 25 mm).

BRIEF DESCRIPTION OF DRAWINGS

Fig. 1 is a partial diagrammatic cross-sectional view illustrating a case of attaching the seal ring of the present invention to a power steering device or an automatic transmission device.

Fig. 2 is a partial diagrammatic cross-sectional view illustrating a typical change of the seal ring when the device shown in Fig. 1 is rotated.

Fig. 3 is a partial diagrammatic cross-sectional view illustrating breakage of the seal ring when the device shown in Fig. 1 is rotated.

Fig. 4 is a partial diagrammatic cross-sectional view illustrating an abrasion state of the opposite material (housing) when the device shown in Fig. 1 is rotated.

Fig. 5 is a partial diagrammatic cross-sectional view illustrating a case of attaching the seal ring of the present invention to a shock absorber device.

Fig. 6 is a partial diagrammatic cross-sectional view illustrating an abrasion state of the seal ring and the opposite material (cylinder) when the device shown in Fig. 5 is subjected to reciprocative movement.

Fig. 7 is a diagrammatic plane view illustrating a cut part of the seal ring for an automatic transmission subjected to the durability test of Example 7.

BEST MODE FOR CARRYING OUT THE INVENTION

The PTFE powder used in the present invention may be a homopolymer of tetrafluoroethylene or a PTFE powder modified by another monomer copolymerizable with tetrafluoroethylene. From the viewpoint of heat resistance, chemical resistance and creep resistance, modified PTFE is preferable.

Example of modified PTFE are those which is not melt-moldable and contains 0.001 to 1 % by weight of a perfluoro(vinyl ether) unit represented by the formula (I):

$$-CF_2-CF(-O-X)- \qquad (I)$$

wherein X represents a perfluoroalkyl group having 1 to 6 carbon atoms or a perfluoroalkoxyalkyl group having 4 to 9 carbon atoms.

Examples of perfluoro(vinyl ether) are perfluoro(alkyl vinyl ethers) such as perfluoro(methyl vinyl ether) (PMVE), perfluoro(ethyl vinyl ether) (PEVE), perfluoro(propyl vinyl ether) (PPVE) and perfluoro(butyl vinyl ether) (PBVE).

The average particle size of the PTFE powder is 10 to 120 $\mu$m, more preferably 10 to 50 $\mu$m.

The present invention is characterized in that the above specific scaly graphite powder essentially alone is contained as a filler.

Examples of graphite powder are natural graphite, artificial graphite, expanded graphite, graphite fluoride, spherical carbon, carbon fluoride, graphite whisker, etc. However, as to the seal ring of the present invention, it is only the above specific scaly graphite that has an excellent effect. Specifically, the scaly graphite has an especially excellent effect on preventing the abrasion of the opposite material (usually aluminum), the deformation of the seal ring and the abrasion of the seal ring itself.

It is necessary that the shape of the particles of the specific graphite powder of the present invention is scaly. Though the particles of the graphite powder may be spherical, fibrous, or the shape may be undefined, the scaly graphite powder exhibits a more excellent effect on preventing the deformation of the seal ring due to external pressure and reducing the sliding resistance. The size of the scaly graphite powder can be expressed in the average particle size, but more precisely, the size is such that when "a" represents the mean value of the long diameter and the short diameter of a graphite powder particle and "c" represents the thickness of the graphite powder particle, a/c is at least 2, and the mean value "a" is at most 0.01 $\mu$m, preferably 0.1 to 500 $\mu$m, more preferably 5 to 30 $\mu$m. Scaly graphite having the above size is particularly excellent in preventing the deformation of the seal ring due to external pressure and the abrasion of the seal ring itself. The size is measured by using a scanning electron microscope. When expressed in the average particle size, the average particle size corresponds to the mean value "a".

The graphite powder used in the present invention has an interplanar spacing of 0.335 to 0.340 nm, as measured by the powder X-ray diffraction method. Since the theoretical value of the interplanar spacing of graphite is 0.335 nm, the interplanar spacing of the graphite powder used in the present invention is fairly close to the theoretical value. As graphite having an interplanar spacing of the above range has a nature that the slide between planes (sometimes referred to as layers), i.e., "peeling" is extremely excellent, it is considered that the low frictional property can be imparted to the seal ring. The interplanar spacing is preferably 0.335 to 0.337 nm, more preferably 0.335 to 0.336 nm.

Also, the larger the crystallite of (004) face is, the better the property is. The size is at least 70 nm, preferably at least 80 nm, more preferably at least 90 nm.

Examples of graphite having these properties are natural graphite and some of the synthesized graphites. Among them, natural graphite is preferable from the viewpoint of availability and low cost.

The proportion (% by weight) of the PTFE powder and the specific scaly graphite powder is 65 to 98 / 2 to 35 (100 % by weight in total; the same applies in the followings), preferably 70 to 97 / 3 to 30, more preferably 85 to 95 / 5 to 15. When the amount of the scaly graphite powder is too large, inherent properties of the PTFE are deteriorated. When the amount of the scaly graphite powder is too small, durability is decreased.

The scaly graphite powder is mixed by usual method, and if required, granulated to obtain a molding resin powder for seal rings. The powder is then molded into a seal ring by various known molding methods, for example, compression molding method, ram extrusion molding method, paste extrusion molding method, isostatic molding method, hot coining molding method, etc. In any of those molding methods, the molded article is finally subjected to sintering. In the present invention, the sintering temperature is from 323° to 400°C, preferably from 350° to 385°C.

The thus-obtained seal ring has properties

(A) breakage of the seal ring does not occur even after 200,000 sliding cycles;
(B) the abrasion depth of the opposite material is at most 10 $\mu$m, preferably at most 5 $\mu$m after 200,000 cycles; and
(C) extrusion of the seal ring is at most 1 mm, preferably at most 0.5 mm after 200,000 cycles,

as measured under the above-mentioned test conditions (1).

The seal ring of the present invention possesses two or all three of the above properties and has overcome the common limit of the prior arts. Moreover, when the natural graphite powder is used as a filler, the production costs can be greatly reduced because the natural graphite powder is relatively inexpensive.

As shown in Fig. 1, when the seal ring 1 of endless type is wound on the seal ring set body 3, the seal ring 1 is fitted stretched like a rubber band. Therefore the seal ring 1 needs to have a certain degree of elasticity and is required to recover its original form immediately after the fitting.

In order to endow the PTFE seal ring with elasticity (recoverability of form), the following methods are known:

(1) a method of shortening the sintering time of PTFE,
(2) a method of rapid cooling after the sintering of PTFE, and
(3) a method of lowering the sintering temperature.

However when importance is attached to suitability for fitting (elasticity and recoverability of form), durability becomes insufficient, and when importance is attached to durability, suitability for fitting becomes inferior.

In such circumstances it has been unexpectedly found that suitability for fitting can be improved while excellent durability is maintained when 2 to 35 % by weight of scaly graphite powder is added essentially alone as a filler and modified PTFE mentioned above is used as PTFE.

Usually, when the seal ring is once stretched and recovers its original form, the recovery is not complete and the outer diameter of the seal ring is unfavorably extended. Therefore, when the variation of outer diameter is small, suitability for fitting can be regarded as good.

In the present invention, when modified PTFE is used as PTFE, a seal ring is provided, which has excellent suitability for fitting such that the variation of outer diameter is at most 3.4 %, preferably at most 3.2 % as measured under the above test condition (2) with maintaining durability.

In order to improve the suitability for fitting, the crystallinity should be adjusted low. However, it is difficult to maintain durability in a usual combination of a filler and PTFE. On the other hand, when the modified PTFE is used as in the combination of the present invention, higher crystallinity can be achieved as compared with the case of using a TFE homopolymer. In the present invention, it is preferable to use a modified PTFE having a crystallinity of at least 20 %, particularly at least 25 %. In addition, since the modified PTFE provides a higher crystallinity under the same sintering condition, it is possible to cut off the energy and time consumed in sintering and cooling carried out for achieving a desired crystallinity.

Examples of devices in which the seal ring of the present invention is used are a hydraulic power steering, automatic transmission, engine piston ring, shock absorber, etc. for automobiles and a hydraulic cylinder, etc. for industrial machinery. Among them, the seal ring is suitable for a power steering valve where the following characteristics are particularly required: a small resistance at sliding, a smaller wear amount of the opposite material, small deformation of the seal ring under high pressure (not less than 8 MPa) and less leakage of oil even for long use.

Also, the seal ring of the present invention can be suitably used as a seal ring for automatic transmission or shock absorber where safety and durability are required.

That is, the present invention provides a seal ring for automatic transmission which does not break after 500 hours and which achieves an abrasion depth of the opposite material of at most 10 $\mu$m, preferably at most 5 $\mu$m after 500 hours when the seal ring is subjected to rotational sliding under the above conditions (3).

And the present invention also provides a seal ring for shock absorber which does not break after 5,000,000 strokes and which achieves a maximum sliding resistance Fmax within the period of 5,000,000 strokes without the period of initial unstable sliding resistance of less than 1.5 times, preferably less than 1.3 times the minimum sliding resistance Fmin within the period, and an oil leakage after 5,000,000 strokes of at most 15 ml, preferably at most 10 ml, when the seal ring is subjected to reciprocating sliding strokes under the above conditions (4).

Herein, the term "without the period of initial unstable sliding resistance" means that the period of initial unstable sliding resistance is excluded since the friction torque is unstable and sometimes increases rapidly until about 50,000 cycles in a sliding experiment under high pressure.

The present invention is then explained by means of examples, but is not limited to them.

EXAMPLE 1

Eighty-five parts by weight of PTFE powder modified with 1 % by weight of perfluoro(propyl vinyl ether) (average particle size: 30 $\mu$m) was pre-mixed with 15 parts by weight of natural graphite powder (CPB-3000 available from Chuetsu Kokuen Kabushiki Kaisha, scaly, interplanar spacing: 0.335 nm, a/c = 10, size of crystallite of (004) face: 101.0 nm) and the mixture was granulated to obtain a resin powder for molding.

The interplanar spacing of graphite was measured by using a powder X-ray diffraction measuring machine (RAD-RA type made by Rigaku International Corporation) according to the Gakushin method mentioned above, and the size of a crystallite of (004) face was measured by using a scanning electron microscope (S4000 made by Hitachi, Ltd.) with 5,000 magnification.

The above resin powder for molding was subjected to compression molding, sintered at 360°C for 48 minutes, and immediately cooled in the air (20°C) to obtain a sample seal ring (inner diameter: 33.4 mm, outer diameter: 36.4 mm). The sample seal ring was subjected to the following durability test. The results are shown in Table 1.

Method of test

Test equipment: Test equipment for evaluating durability of a seal ring having basically the same mechanism as a rack-and-pinion type power steering device
Oil pressure: 12 MPa
Oil temperature: 120°C
Kind of oil: Power steering fluid (RODEO PSF available from Nippon Mitsubishi Oil Corporation)
Sliding cycle: One cycle consisting of a normal rotation at 95 rpm for 2 seconds and a reverse rotation at 95 rpm for 2 seconds
Opposite material: Aluminum die cast ADC12 (JIS H5302)
Seal ring-mounting member: Carbon steel S45C (JIS G4051)

Evaluation of properties

(Life of seal ring)

The number of sliding cycles at which the seal ring is broken (to cause oil leakage) is assumed to be the life of the seal ring. The sliding is stopped when the seal ring does not break after 200,000 cycles.

(Change of the maximum friction torque)

Rotational torque generated when two seal rings which seal oil are rotated at 95 rpm for 2 seconds in a cycle is recorded during the period from the start of sliding to 200,000 cycles. The maximum value was assumed to be the maximum rotational torque.

(Abrasion depth of opposite material)

When the seal ring is broken or the sliding is stopped after 200,000 cycles, the deepest abrasion ($\mu$m) in the abrasion part of the opposite material (aluminum die cast) (scraped portion 6 in Fig. 4) is measured by using a surface roughness measuring machine (Surftest SV-600 made by Mitsutoyo Corporation).

(Extrusive amount of seal ring)

The length of extrusion (mm) of the seal ring (extruded portion 5 in Figs. 2 and 3) is measured when the sliding is stopped after 200,000 cycles, except for rings which were broken (causing oil leakage) during the sliding.

EXAMPLE 2

Molding was carried out in the same manner as in Example 1 except that the amount of the PTFE powder was changed to 95 parts by weight and the amount of the natural graphite powder was changed to 5 parts by weight, and a seal ring was produced. The durability of the seal ring was evaluated in the same manner as in Example 1. The results are shown in Table 1.

COMPARATIVE EXAMPLES 1 to 6

Granulation and molding were carried out in the same manner as in Example 1 except that the fillers shown in Table 1 were used, and seal rings for comparison were produced. The durability of the seal rings was evaluated in the same manner as in Example 1. The results are shown in Table 1.

Abbreviations in Table 1 represent the following items:

Natural GR: Natural graphite powder (CPB-3000 available from Chuetsu Kokuen Kabushiki Kaisha, scaly, interplanar spacing: 0.335 nm, a/c = 10, size of crystallite of (004) face: 101.0 nm)
Artificial GR1: Artificial graphite powder (EG-1C available from Nippon Carbon Kabushiki Kaisha, bulk, interplanar spacing: 0.337 nm, a/c = 2, size of crystallite of (004) face: 51.0 nm)
Artificial GR2: Artificial graphite powder (Bellpearl C2000 available from Kanebo, Ltd., spherical, interplanar spacing: 0.337 nm, a/c = 1, size of crystallite of (004) face: 60.0 nm)
POB: Heat resistant aromatic polyoxybenzoyl ester resin powder (SUMICA SUPER available from Sumitomo Chemical Company, Limited, average particle size: 20 $\mu$m)
CF: Carbon fiber (M2006S available from Kabushiki Kaisha Kureha, average fiber diameter: 15 $\mu$m, average fiber length: 100 $\mu$m)
BZ: Bronze powder (SD-200 available from Fukuda Metal Foil Powder Co., Ltd., average particle size: 20 $\mu$m)
PI: Polyimide powder (Kelimide 1050 available from Asahi Chiba Kabushiki Kaisha, average particle size: 20 $\mu$m)

TABLE 1

| | | Ex. | | Com. Ex. | | | | | |
|---|---|---|---|---|---|---|---|---|---|
| | | 1 | 2 | 1 | 2 | 3 | 4 | 5 | 6 |
| Seal ring | | | | | | | | | |
| | PTFE powder | 85 | 95 | 85 | 80 | 89 | 60 | 83 | 85 |
| | Filler | | | | | | | | |
| | Natural GR | 15 | 5 | | | | | | |
| | Artificial GR 1 | | | 15 | | 7 | | | |
| | Artificial GR 2 | | | | | | | | 15 |
| | POB | | | | 15 | | | | |
| | CF | | | | 5 | 4 | 10 | 5 | |
| | BZ | | | | | | 30 | | |
| | PI | | | | | | | 12 | |
| Properties concerning durability | | | | | | | | | |

(continued)

| | | Ex. | | Com. Ex. | | | | | |
|---|---|---|---|---|---|---|---|---|---|
| | | 1 | 2 | 1 | 2 | 3 | 4 | 5 | 6 |
| Life | | 200,000 cycles (stopped) | 200,000 cycles (stopped) | 67,165 (broken) | 200,000 cycles (stopped) | 36,800 (broken) | 62,700 (broken) | 56,500 (broken) | 35,000 (broken) |
| Deepest abrasion of opposite material ($\mu$m) | | 2.0 | 1.8 | 2.3 | 10.4 | 37.0 | 38.5 | 37.5 | 38.0 |
| Maximum friction torque Tmax (N·m) | | 2.3 | 2.3 | 2.1 | 2.5 | 2.7 | 3.7 | 2.4 | 3.0 |
| Extrusion (mm) | | 0.4 | 0.3 | broken | 2.1 | broken | broken | broken | broken |

EXAMPLES 3 and 4

The crystallinity and the variation of outer diameter of the sample seal rings produced in Examples 1 and 2 (inner diameter: 33.4 mm, outer diameter: 36.4 mm, height: 1.88 mm) were measured by the following methods. The results are shown in Table 2.

(Measurement of crystallinity)

Measuring device: Differential scanning colorimeter model RDC220 made by Seiko Denshi Kogyo Kabushiki Kaisha
Measuring conditions: The seal ring is heated up from room temperature to 250°C at a heating rate of 50°C/min, allowed to stand at 250°C for 1 minute, heated up to 380°C at a heating rate of 10°C/min and then allowed to stand at 380°C for 1 minute.
Calculation: The crystallinity is calculated by the following equation:

$$\text{Crystallinity (\%)} = (\text{Measured heat of melting}/\text{Heat of melting of 100 \% crystallized PTFE}) \times 100$$

The heat of melting of 100 % crystallized PTFE is 92.93 J/g under the above measuring conditions.

(Measurement of variation of outer diameter)

The sample seal ring is set on a tapered jig of frustum form (inclination: 1/10) to enlarge an inner diameter of the seal ring by 10 %, and then immediately the outer diameter of the seal ring is measured. ((Outer diameter after test - Outer diameter before test)/Outer diameter before test) x 100 is assumed to be the variation of outer diameter.

EXAMPLES 5 and 6

Sample seal rings were produced in the same manner as in Example 1 except that a homopolymer of TFE was used instead of modified PTFE in an amount of 85 parts by weight (Example 5) and 95 parts by weight (Example 6). The crystallinity and the variation of outer diameter were evaluated in the same manner as in Example 3. The results are shown in Table 2.

TABLE 2

|  | Ex. | | | |
|---|---|---|---|---|
|  | 3 | 4 | 5 | 6 |
| Kind and amount (part by weight) ofPTFE |  |  |  |  |
| Modified PTFE | 85 | 95 | - | - |
| PTFE (not modified) | - | - | 85 | 95 |
| Natural graphite (part by weight) | 15 | 5 | 15 | 5 |
| Crystallinity (%) | 26.5 | 26.5 | 19.4 | 19.4 |
| Variation of outer diameter (%) | 3.3 | 2.4 | 3.3 | 2.4 |

EXAMPLE 7

A resin powder for molding was prepared by pre-mixing 85 parts by weight of PTFE powder modified with 1 % by weight of perfluoro(propyl vinyl ether) (average particle size: 30 $\mu$m) and 15 parts by weight of natural graphite (CPB-3000 available from Chuetsu Kokuen Kabushiki Kaisha) and granulating the mixture by a usual method.

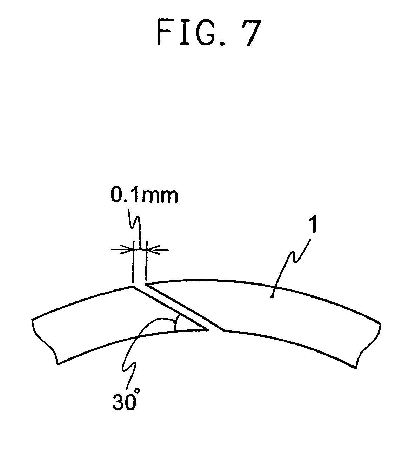

The above resin powder for molding was subjected to compression molding to obtain a sample seal ring (inner diameter: 46 mm, outer diameter: 50 mm, thickness: 2 mm, part of the ring is cut at an angle of 30 degrees to a tangential line in a cut width of 0.1 mm; see Fig. 7). The sample seal ring was subjected to the durability test under the condition (3). The results are shown in Table 3.

Method of test

Test equipment: Test equipment for evaluating durability of a seal ring having basically the same mechanism as an automatic transmission device
Oil pressure: 2 MPa
Oil temperature: 120°C
Kind of oil: Automatic transmission fluid (ATF D4 available from Nippon Mitsubishi Oil Corporation)
Rotation number: 8,000 rpm
Opposite material: Aluminum die cast ADC12 (JIS H5302)
Seal ring-mounting member: Cast iron FC205 (JIS G5501)
Seal ring: outer diameter: 50 mm, width: 2 mm, height: 2 mm

Evaluation of properties

(Life of seal ring)

The sliding cycle at which the seal ring is broken (causing oil leakage, the oil pressure cannot be kept) is assumed to be the life of the seal ring. The sliding is stopped when the seal ring does not break after 500 hours.

(Abrasion depth of opposite material)

When the seal ring is broken or the sliding is stopped after 500 hours, the deepest abrasion ($\mu$m) in the abrasion part of the opposite material (aluminum die cast) (scraped portion 6 in Fig. 4) is measured by using a surface roughness measuring machine (Surftest SV-600 made by Mitsutoyo Corporation).

EXAMPLES 8 and 9

Molding was carried out in the same manner as in Example 7 except that the amount of the natural graphite powder was changed as shown in Table 3, and the seal rings of the present invention were produced. The durability of the seal rings was evaluated in the same manner as in Example 7. The results are shown in Table 3.

COMPARATIVE EXAMPLES 7 to 10

Granulation and molding were carried out in the same manner as in Example 7 except that the fillers shown in Table 3 were used, and seal rings for comparison were produced. The durability of the seal rings was evaluated in the same manner as in Example 7. The results are shown in Table 3.

TABLE 3

|  |  | Ex. | | | Com. Ex. | | | |
|---|---|---|---|---|---|---|---|---|
|  |  | 7 | 8 | 9 | 7 | 8 | 9 | 10 |
| Seal ring |  |  |  |  |  |  |  |  |
|  | PTFE powder | 85 | 90 | 95 | 80 | 89 | 60 | 83 |
|  | Filler |  |  |  |  |  |  |  |
|  | GR | 15 | 10 | 5 |  |  |  |  |
|  | POB |  |  |  | 15 |  |  |  |
|  | CF |  |  |  | 5 | 4 | 10 | 5 |
|  | GRA |  |  |  |  | 7 |  |  |
|  | BZ |  |  |  |  |  | 30 |  |
|  | PI |  |  |  |  |  |  | 12 |
| Properties concerning durability |  |  |  |  |  |  |  |  |
|  | Life (hour) | 500 (stopped) | 500 (stopped) | 500 (stopped) | 500 (stopped) | 500 (stopped) | 250 (broken) | 500 (stopped) |
|  | Deepest abrasion of opposite material ($\mu$m) | 3.8 | 4.0 | 4.5 | 11.5 | 25.5 | 40.5 | 15.5 |

EXAMPLE 10

A resin powder for molding was prepared by pre-mixing 85 parts by weight of PTFE powder modified with 1 % by weight of perfluoro(propyl vinyl ether) (average particle size: 30 $\mu$m) and 15 parts by weight of natural graphite (CPB-3000 available from Chuetsu Kokuen Kabushiki Kaisha) and granulating the mixture by a usual method.

The above resin powder for molding was subjected to compression molding to obtain a sample seal ring (inner diameter: 13.7 mm, outer diameter: 28.5 mm, thickness: 0.8 mm). The sample seal ring was subjected to the durability test under the condition (4). The results are shown in Table 4.

Method of test

Test equipment: Test equipment for evaluating durability of a seal ring having basically the same mechanism as a shock absorber device
Inner diameter of piston: 25 mm
Oil pressure: 10 MPa
Oil temperature: 100°C
Kind of oil: Shock absorber oil

Stroke: 60 mm, one back-and-forth movement is regarded as a stroke
Vibration frequency to be applied: 3 Hz
Opposite material: Carbon steel S45C (JIS H4051)
Seal ring-mounting member: Cast iron FC250 (JIS G5501)
Seal ring: outer diameter: 28.5 mm, width: 7.4 mm, height: 0.8 mm (diameter of applied piston: 25 mm).

Evaluation of properties

(Life of seal ring)

The number of sliding strokes at which the seal ring is broken (causing oil leakage, impossible to keep the oil pressure) is assumed to be the life of the seal ring. The sliding is stopped when the seal ring does not break after 5,000,000 strokes.

(Change of sliding resistance)

Among the values of friction occurring when the seal ring set on the piston is subjected to reciprocating sliding strokes between the inner face of the cylinder, the maximum friction value in each stroke was assumed to be the sliding resistance of the stroke. The maximum sliding resistance Fmax and the minimum sliding resistance Fmin within the period of 5,000,000 strokes without the period of initial unstable sliding resistance (or until the seal ring is broken) were obtained (the initial rapid increase of the sliding resistance sometimes occurs before 500,000 strokes). The largest change of sliding resistance is represented by the value obtained by (Fmin/Fmax) x 100 (%).

(Amount of oil leakage)

After 5,000,000 strokes, oil which leaked from the oil chamber was collected and the amount of the leaked oil was measured by a measuring cylinder.

EXAMPLES 11 to 12

Molding was carried out in the same manner as in Example 10 except that the amount of the natural graphite powder was changed as shown in Table 4, and seal rings of the present invention were produced. The durability of the seal rings was evaluated in the same manner as in Example 10. The results are shown in Table 4.

COMPARATIVE EXAMPLES 11 to 14

Granulation and molding were carried out in the same manner as in Example 10 except that the fillers shown in Table 4 were used, and seal rings for comparison were produced. The durability of the seal rings was evaluated in the same manner as in Example 10. The results are shown in Table 4.

TABLE 4

|  |  | Ex. | | | Com. Ex. | | | |
|---|---|---|---|---|---|---|---|---|
|  |  | 10 | 11 | 12 | 11 | 12 | 13 | 14 |
| Seal ring |  |  |  |  |  |  |  |  |
|  | PTFE powder | 80 | 85 | 90 | 80 | 89 | 60 | 83 |
|  | Filler |  |  |  |  |  |  |  |
|  | GR | 15 | 10 | 5 |  |  |  |  |
|  | POB |  |  |  | 15 |  |  |  |
|  | CF |  |  |  | 5 | 4 | 10 | 5 |
|  | GRA |  |  |  |  | 7 |  |  |
|  | BZ |  |  |  |  |  | 30 |  |
|  | PI |  |  |  |  |  |  | 12 |
| Properties concerning durability |  |  |  |  |  |  |  |  |

(continued)

| | | Ex. | | | Com. Ex. | | | |
|---|---|---|---|---|---|---|---|---|
| | | 10 | 11 | 12 | 11 | 12 | 13 | 14 |
| | Life ($\times 10^4$ stroke) | 500 (stopped) | 500 (stopped) | 500 (stopped) | 500 (stopped) | 500 (stopped) | 250 (broken) | 500 (stopped) |
| | Maximum sliding resistance Fmax (N·m) | 82 | 86 | 90 | 110 | 120 | 170 | 115 |
| | Minimum sliding resistance Fmin (N·m) | 62 | 61 | 63 | 65 | 67 | 85 | 64 |
| | (Fmin/ Fmax) $\times$ 100 (%) | 1.3 | 1.4 | 1.4 | 1.7 | 1.8 | 2 | 1.8 |
| | Amount of oil leakage | 9 | 8 | 9 | 15 | 24 | 200 | 21 |

INDUSTRIAL APPLICABILITY

According to the seal ring of the present invention, deformation and extrusion of the seal ring can be kept small even under a high pressure, and the abrasion of the opposite material can be prevented even if it is made of a soft metal. Therefore, it is possible to maintain a stable sealing effect for a longer period of time. In addition, since the seal ring has low frictional property and small change in the friction torque particularly under high oil pressure, handling property and response of the valve device of power steering can be significantly improved.

Furthermore, when used for automatic transmission where sliding occurs under a high rotation number or for shock absorber where sealing under reciprocating sliding is required, the seal ring of the present invention shows a great performance which was never seen.

**Claims**

1. A seal ring which contains a scaly graphite powder essentially alone as a filler,
   and consists essentially of 2 to 35 % by weight of the graphite powder and 65 to 98 % by weight of a polytetrafluoroethylene powder,
   wherein the graphite powder has an interplanar spacing of 0.335 to 0.340 nm, as measured by the powder X-ray diffraction method, and a size of a crystallite of (004) face of at least 70 nm.

2. The seal ring of Claim 1, wherein when "a" represents a mean value of the long diameter and the short diameter of a graphite powder particle and "c" represents a thickness of the graphite powder particle, a/c is at least 2.

3. The seal ring of Claim 1 or 2, wherein the scaly graphite powder is natural graphite.

4. The seal ring of any of Claims 1 to 3, wherein the polytetrafluoroethylene powder is a polytetrafluoroethylene powder modified by a monomer copolymerizable with tetrafluoroethylene.

5. The seal ring of Claim 4 which is used for a valve device of a power steering of automobiles.

6. The seal ring of Claim 4 or 5, wherein when the seal ring is subjected to sliding under the following conditions, the seal ring does not break after 200,000 cycles and an abrasion depth of the opposite material is at most 10 $\mu$m after 200,000 cycles:

   Test equipment: Test equipment for evaluating durability of a seal ring having basically the same mechanism as a rack-and-pinion type power steering device
Oil pressure: 12 MPa
Oil temperature: 120°C
Kind of oil: Power steering fluid
Cycle: One cycle consisting of a normal rotation at 95 rpm for 2 seconds and a reverse rotation at 95 rpm for 2 seconds
Opposite material: Aluminum die cast (JIS H5302)
Seal ring-mounting member: Carbon steel (JIS G4051).

7. The seal ring of Claim 4 or 5, wherein when the seal ring is subjected to sliding under the conditions of Claim 6, the seal ring does not break and extrusion of the seal ring is at most 1 mm after 200,000 cycles.

8. The seal ring of Claim 4 or 5, wherein the seal ring has a variation of outer diameter of at most 3.4 % as measured under the following conditions:

Test method: enlarging an inner diameter of the seal ring to be tested by 10 % by setting the seal ring on a tapered jig of frustum form (inclination: 1/10), and then immediately measuring an outer diameter of the seal ring, wherein ((Outer diameter after test - Outer diameter before test) / Outer diameter before test) x 100 is assumed to be a variation of outer diameter
Tested seal ring: a ring whose cross-section is a rectangle of 1.5 mm by 1.88 mm, and whose inner diameter is 33.4 mm and an outer diameter is 36.4 mm.

9. The seal ring of Claim 8 which has a crystallinity of at least 20 %.

10. The seal ring of any of Claims 1 to 5, wherein the seal ring is used for automatic transmission, and when the seal ring is subjected to rotational sliding under the following conditions, the seal ring does not break after 500 hours and an abrasion depth of the opposite material is at most 10 $\mu$m after 500 hours:

Test equipment: Test equipment for evaluating durability of a seal ring having basically the same mechanism as an automatic transmission device
Oil pressure: 2 MPa
Oil temperature: 120°C
Kind of oil: Automatic transmission fluid
Rotation number: 8,000 rpm
Opposite material: Aluminum die cast (JIS H5302)
Seal ring-mounting member: Cast iron (JIS G5501)
Seal ring: outer diameter 50 mm, width 2 mm, height 2 mm.

11. The seal ring of any of Claims 1 to 5, wherein the seal ring is used for shock absorber, and when the seal ring is subjected to reciprocating sliding strokes under the following conditions, the seal ring does not break after 5,000,000 strokes; the maximum sliding resistance Fmax within the period of 5,000,000 strokes without the period of initial unstable sliding resistance is less than 1.5 times the minimum sliding resistance Fmin within the period; and oil leakage after 5,000,000 strokes is at most 15 ml:

Test equipment: Test equipment for evaluating durability of a seal ring having basically the same mechanism as a shock absorber device
Oil pressure: 10 MPa
Oil temperature: 100°C
Kind of oil: Shock absorber oil
Stroke: 60 mm
Vibration frequency to be applied: 3 Hz
Opposite material: Carbon steel (JIS H4051)
Seal ring-mounting member: Cast iron (JIS G5501)
Seal ring: outer diameter: 28.5 mm, width: 7.4 mm, height: 0.8 mm (diameter of applied piston: 25 mm).

**Patentansprüche**

1. Dichtungsring, der als Füllstoff im wesentlichen einzig ein schuppiges Graphitpulver enthält und im wesentlichen aus 2 bis 35 Gew.% des Graphitpulvers and 65 bis 98 Gew.% eines Polytetrafluorethylenpulvers besteht, worin das Graphitpulver einen interplanaren Abstand von 0,335 bis 0,340 nm, gemessen durch ein Pulver-Röntgen-Diffraktionsverfahren, und eine Größe der (004) Seite des Kristalliten von mindestens 70 nm aufweist.

2. Dichtungsring gemäß Anspruch 1, worin, wenn "a" einen Mittelwert des Langdurchmessers und des Kurzdurchmessers eines Graphitpulverpartikels darstellt und "c" die Dicke des Graphitpulverpartikels darstellt, a/c zumindest 2 beträgt.

3. Dichtungsring gemäß Anspruch 1 oder 2, worin das schuppige Graphitpulver natürliches Graphit ist.

4. Dichtungsring gemäß irgendeinem der Ansprüche 1 bis 3, worin das Polytetrafluorethylenpulver ein Polytetrafluorethylenpulver ist, das mit einem Monomer modifiziert ist, das mit Tetrafluorethylen copolymerisierbar ist.

5. Dichtungsring gemäß Anspruch 4, der für eine Ventilvorrichtung einer Servolenkung von Automobilen verwendet wird.

6. Dichtungsring gemäß Anspruch 4 oder 5, worin, wenn der Dichtungsring einem Gleiten unter den folgenden Bedingungen unterzogen wird, der Dichtungsring nach 200.000 Zyklen nicht bricht und die Abriebtiefe des gegenüberliegenden Materials nach 200.000 Zyklen höchstens 10 $\mu$m beträgt:

   Testausrüstung: Testausrüstung zum Bewerten der Haltbarkeit eines Dichtungsrings, die grundlegend denselben Mechanismus wie eine Servolenkungsvorrichtung vom Zahnstangentyp besitzt.
   Öldruck: 12 MPa
   Öltemperatur: 120°C
   Art des Öls: Servolenkungsflüssigkeit
   Zyklus: Ein Zyklus besteht aus einer Normalrotation bei 95 U/min für 2 Sekunden und einer gegenläufigen Rotation bei 95 U/min für 2 Sekunden.
   gegenüberliegendes Material: Aluminiumguß (JIS H5302) Element, auf dem der Dichtungsring montiert ist: Kohlenstoffstahl (JIS G4051).

7. Dichtungsring gemäß Anspruch 4 oder 5, worin, wenn der Dichtungsring einem Gleiten unter den Bedingungen von Anspruch 6 unterzogen wird, der Ring nicht bricht und die Verdrängung ("extrusion") des Dichtungsrings nach 200.000 Zyklen höchstens 1 mm beträgt.

8. Dichtungsring gemäß Anspruch 4 oder 5, worin der Dichtungsring eine Veränderung des äußeren Durchmessers von höchstens 3,4 % aufweist, gemessen unter den folgenden Bedingungen:

   Testverfahren: Vergrößern des inneren Durchmessers des zu testenden Dichtungsrings um 10 %, indem der Dichtungsring auf eine konische Spannvorrichtung ("tapered jig") mit abgestumpfter Kegelform (Neigung: 1/10) gesetzt wird und dann unmittelbar der äußere Durchmesser des Dichtungsrings gemessen wird, worin ((äußerer Durchmesser nach dem Test - äußerer Durchmesser vor dem Test)/äußerer Durchmesser vor dem Test) x 100 als Veränderung des äußeren Durchmessers angesehen wird.
   getesteter Dichtungsring: Ein Ring, dessen Querprofil ein Rechteck von 1,5 mm x 1,88 mm ist und dessen innerer Durchmesser 33,4 mm und dessen äußerer Durchmesser 36,4 mm beträgt.

9. Dichtungsring gemäß Anspruch 8, der eine Kristallinität von mindestens 20 % besitzt.

10. Dichtungsring gemäß irgendeinem der Ansprüche 1 bis 5, worin der Dichtungsring für ein Automatikgetriebe verwendet wird, und wenn der Dichtungsring einem Drehgleiten unter den folgenden Bedingungen unterzogen wird, der Dichtungsring nach 500 Stunden nicht bricht und die Abriebtiefe des gegenüberliegenden Materials nach 500 Stunden höchstens 10 $\mu$m beträgt:

   Testausrüstung: Testausrüstung zum Bewerten der Haltbarkeit eines Dichtungsrings, die grundlegend den gleichen Mechanismus wie eine Automatikgetriebevorrichtung besitzt.
   Öldruck: 2 MPa

Öltemperatur: 120°C
Art des Öls: Automatikgetriebeflüssigkeit Rotationszahl: 8.000 U/min
gegenüberliegendes Material: Aluminiumguß (JIS H5302) Element, auf dem der Dichtungsring montiert ist: Gußeisen (JIS G5501)
Dichtungsring: äußerer Durchmesser 50 mm, Breite 2 mm, Höhe 2 mm .

11. Dichtungsring gemäß irgendeinem der Ansprüche 1 bis 5, worin der Dichtungsring für einen Stoßdämpfer verwendet wird, und wenn der Dichtungsring gleitendem Kolbenhub unter den folgenden Bedingungen unterzogen wird, der Dichtungsring nach 5.000.000 Hüben nicht bricht; der maximale Gleitwiderstand Fmax innerhalb der Periode von 5.000.000 Hüben, ohne die Zeitspanne von anfänglich unstabilem Gleitwiderstand, weniger als 1,5 mal des minimalen Gleitwiderstands Fmin innerhalb der Zeitspanne beträgt; und der Ölaustritt nach 5.000.000 Hüben höchstens 15 ml beträgt:

Testausrüstung: Testausrüstung zum Bewerten der Haltbarkeit eines Dichtungsrings, die grundlegend den gleichen Mechanismus wie eine Stoßdämpfervorrichtung besitzt.
Öldruck: 10 MPa
Öltemperatur: 100°C
Art des Öls: Stoßdämpferöl
Hub: 60 mm
einzusetzende Schwingungsfrequenz: 3 Hz gegenüberliegendes Material: Kohlenstoffstahl (JIS H4051)
Element, auf dem der Dichtungsring montiert wird: Gußeisen (JIS G5501)
Dichtungsring: äußerer Durchmesser 28,5 mm, Breite 7,4 mm, Höhe 0,8 mm (Durchmesser des eingesetzten Kolbens: 25 mm).

**Revendications**

1. Bague d'étanchéité qui contient une poudre de graphite écailleuse sensiblement unique comme agent de remplissage,
   et consiste sensiblement en 2 à 35 % en poids de poudre de graphite et 65 à 98 % en poids d'une poudre de polytétrafluoréthylène,
   dans laquelle la poudre de graphite a une distance interréticulaire de 0,335 à 0,340 nm, lorsque mesurée par le procédé de diffraction aux rayons X de la poudre, et une taille de grain cristallin de la face (004) d'au moins 70 nm.

2. Bague d'étanchéité selon la revendication 1, dans laquelle lorsque "a" représente une valeur moyenne du long diamètre et le diamètre court d'une particule de poudre de graphite et "c" représente une épaisseur de la particule de poudre de graphite, a/c est au moins égal à 2.

3. Bague d'étanchéité selon la revendication 1 ou 2, dans lequel la poudre de graphite écailleuse est du graphite naturel.

4. Bague d'étanchéité selon l'une quelconque des revendications 1 à 3, dans laquelle la poudre de polytétrafluoréthylène est une poudre de polytétrafluoréthylène modifiée par un monomère pouvant être copolymérisé avec du tétrafluoroéthylène.

5. Bague d'étanchéité selon la revendication 4, qui est utilisée pour un dispositif de vanne d'une direction assistée pour automobiles.

6. Bague d'étanchéité selon la revendication 4 ou 5, dans laquelle, lorsque la bague d'étanchéité est soumise à un coulissement sous les conditions suivantes, la bague d'étanchéité ne casse pas après 200 000 cycles et une profondeur d'abrasion de la matière opposée est d'au plus 10 $\mu$m après 200 000 cycles :

Équipement d'essai : l'équipement d'essai pour évaluer la durabilité d'une bague d'étanchéité comporte essentiellement le même mécanisme qu'un dispositif de direction assistée du type à pignon et crémaillère
Pression d'huile : 12 MPa
Température d'huile : 120 °C
Type d'huile : fluide de direction assistée
Cycle : Un cycle consiste en une rotation normale à 95 tr/min pendant 2 secondes et en une rotation inverse à 95 tr/min pendant 2 secondes

Matière opposée : aluminium moulé sous pression (JIS H5302)

Élément de montage de bague d'étanchéité : acier au carbone (JIS G4051).

7. Bague d'étanchéité selon la revendication 4 ou 5, dans laquelle, lorsque la bague d'étanchéité est soumise à un coulissement sous les conditions de la revendication 6, la bague d'étanchéité ne casse pas et l'extrusion de la bague d'étanchéité est d'au plus 1 mm après 200 000 cycles.

8. Bague d'étanchéité selon la revendication 4 ou 5, dans laquelle la bague d'étanchéité a une variation de diamètre extérieur d'au plus 3,4 % lorsque mesurée sous les conditions suivantes :

Procédé d'essai : agrandissement d'un diamètre intérieur de la bague d'étanchéité à évaluer de 10 % en mettant la bague d'étanchéité sur un gabarit effilé en forme de tronc (inclinaison : 1/10), et ensuite en mesurant immédiatement un diamètre extérieur de la bague d'étanchéité, dans laquelle une variation de diamètre extérieur est donnée par ((diamètre extérieur après l'essai - diamètre extérieur avant l'essai) /diamètre extérieur avant l'essai) x 100

Bague d'étanchéité évaluée : une bague dont la section transversale est un rectangle de 1,5 mm par 1,88 mm et dont le diamètre intérieur est de 33,4 mm et un diamètre extérieur est de 36,4 mm.

9. Bague d'étanchéité selon la revendication 8, qui a une cristallinité d'au moins 20 %.

10. Bague d'étanchéité selon l'une quelconque des revendications 1 à 5, dans laquelle la bague d'étanchéité est utilisée pour une transmission automatique, et lorsque la bague d'étanchéité est soumise à un coulissement rotatif sous les conditions suivantes, la bague d'étanchéité ne casse pas après 500 heures et une profondeur d'abrasion de la matière opposée est au plus de 10 μm après 500 heures :

Équipement d'essai : l'équipement d'essai pour évaluer la durabilité d'une bague d'étanchéité comporte essentiellement le même mécanisme qu'un dispositif de transmission automatique

Pression d'huile : 2 MPa

Température d'huile : 120 °C

Type d'huile : fluide de transmission automatique

Nombre de rotations : 8 000 tr/min

Matière opposée : aluminium moulé sous pression (JIS H5302)

Élément de montage de bague d'étanchéité : fonte (JIS G5501)

Bague d'étanchéité : diamètre extérieur 50 mm, largeur 2 mm, hauteur 2 mm.

11. Bague d'étanchéité selon l'une quelconque des revendications 1 à 5, dans laquelle la bague d'étanchéité est utilisée pour un amortisseur, et lorsque la bague d'étanchéité est soumise à des courses de coulissement en va-et-vient sous les conditions suivantes, la bague d'étanchéité ne casse pas après 5 000 000 de courses ; la résistance maximale au coulissement Fmax dans la période de 5 000 000 de courses sans la période de résistance au coulissement instable initiale est inférieure à 1,5 fois la résistance minimale au coulissement Fmin dans la période ; et la fuite d'huile après 5 000 000 de courses est au plus de 15 ml ;

Équipement d'essai : l'équipement d'essai pour évaluer la durabilité d'une bague d'étanchéité comporte essentiellement le même mécanisme qu'un dispositif amortisseur

Pression d'huile: 10 MPa

Température d'huile: 100°C

Type d'huile: huile d'amortisseur

Course: 60 mm

Fréquence de vibration à appliquer: 3 Hz

Matière opposée: acier au carbone (JIS H4051)

Élément de montage de bague d' étanchéité: fonte (JIS G5501)

Bague d'étanchéité : diamètre extérieur : 28,5 mm, largeur : 7,4 mm, hauteur : 0,8 mm (diamètre de piston appliqué : 25 mm).

# FIG. 1

# FIG. 2

# FIG. 3

LEAKAGE

# FIG. 4

LEAKAGE

## FIG. 5

## FIG. 6

LEAKAGE

# FIG. 7

0.1mm

1

30°

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9208929 A
- JP 1013494 B
- JP 11021408 A
- JP 239440 A

**Non-patent literature cited in the description**

- Gakushin method. 46-63
- Experiment Technology of Carbon (I. Kagaku Gijutsu-Sha, 01 June 1978